# EUROPEAN PATENT APPLICATION

(11) **EP 4 817 724 A1**
(43) Date of publication of application: **07.10.2026**
(21) Application number: 26169933.4
(22) Date of filing: 31.03.2026
(51) Int. Cl.: B01D 61/48, B01D 61/46, C02F 1/469

(54) **ELECTRODIALYSIS SYSTEM INCLUDING ION EXCHANGE RESIN AND SALT SEPARATION METHOD USING SAME**

(30) Priority: 02.04.2025 KR 20250043085
(71) Applicant: SK Innovation Co., Ltd., Seoul 03188 (KR)
(72) Inventor: LEE, Tea Young, 34124 Daejeon (KR); MOON, Yong Geal, 34124 Daejeon (KR)
(74) Representative: Prüfer & Partner mbB Patentanwälte · Rechtsanwälte

(57) **Abstract**

An electrodialysis system is proposed. The electrodialysis system includes an anode and a cathode, a plurality of alternating cation exchange membranes and anion exchange membranes disposed between the anode and the cathode, the alternating cation exchange membranes and anion exchange membranes forming a desalination chamber, a concentration chamber, and an electrode chamber within the system, and a mixed ion exchange resin disposed between the electrode chamber and the adjacent concentration chamber, and between the adjacent concentration chambers. The mixed ion exchange resin includes a cation exchange resin and an anion exchange resin, and is arranged to be sandwiched between one of each of the cation and anion exchange membranes.

## Description

### BACKGROUND

### Technical Field

The present disclosure relates to an electrodialysis system including an ion exchange resin and a salt separation method using the same.

### Discussion of Related Art

Electrical energy can be used to concentrate electrolytes in water or remove electrolytes from water. This process typically requires a membrane that allows ions to selectively permeate. The process of using an ion exchange membrane under an electric field is known as electrodialysis (ED).

To improve the efficiency of electrodialysis, research on the composition of ion exchange membranes used in the electrodialysis process has been continuously conducted. As a result of the research, electrodialysis using a bipolar membrane (BPM) was developed, which has the advantage of being energy efficient due to lower energy consumption compared to conventional electrolytic processes.

In addition to electrodialysis systems using bipolar membranes, electrodialysis systems including various ion exchange membranes are under development.

### SUMMARY

The present disclosure relates to an electrodialysis system suitable for high current operation and having improved water dissociation performance.

An electrodialysis system according to a general aspect of the present disclosure includes: an anode and a cathode; a plurality of alternating cation exchange membranes and anion exchange membranes disposed between the anode and the cathode, the alternating cation exchange membranes and anion exchange membranes forming a desalination chamber, a concentration chamber, and an electrode chamber within the system; and a mixed ion exchange resin disposed between the electrode chamber and the adjacent concentration chamber, and between the adjacent concentration chambers, the mixed ion exchange resin including a cation exchange resin and an anion exchange resin. The mixed ion exchange resin is arranged to be sandwiched between one of each of the cation and anion exchange membranes.

In one embodiment, the electrode chamber comprises an anode chamber for an oxygen evolution reaction and a cathode chamber for a hydrogen evolution reaction.

In one embodiment, the plurality of cation exchange membranes and anion exchange membranes may each be provided in a number of 3+2(n-1), where n is an integer greater than or equal to 1, and, preferably, 50 or less.

In one embodiment, the content of the anion exchange resin in the mixed ion exchange resin may be 20 to 80 vol% with respect to a total volume of the mixed ion exchange resin in dry state.

In one embodiment, the cation exchange resin may include a compound containing a sulfonic acid group and/or a salt thereof.

In one embodiment, the anion exchange resin may include a compound containing an amine group and/or a salt thereof.

According to a another general aspect, a salt separation method includes providing an electrodialysis system including an anode, a cathode, and a plurality of alternating cation exchange membranes and anion exchange membranes arranged between the anode and the cathode, the alternating cation exchange membranes and anion exchange membranes forming a desalination chamber, a concentration chamber, and an electrode chamber within the system; introducing a salt solution into the desalination chamber which is arranged to be separated from the concentration chamber by one of the plurality of alternating cation exchange membranes and anion exchange membranes; and applying a current or a voltage to the anode and the cathode of the electrodialysis system. A mixed ion exchange resin is further arranged to be disposed between the electrode chamber and the adjacent concentration chamber, and between the adjacent concentration chambers.

In one embodiment, the salt solution comprises Na₂SO₄. Preferably, the salt solution is an aqueous Na₂SO₄ solution having a concentration of 0.01 to 2.0 mol/L, more preferably of 0.1 to 1.5 mol/L.

In one embodiment, the voltage applied to the anode and the cathode of the electrodialysis system is in a range of 2 V to 100 V, preferably 5 V to 60 V, more preferably 10 to 60 V, most preferably 10 to 50 V, and/or the current is in a range of 0.1 A/cm² or more and 2.0 A/cm² or less.

In one embodiment, the plurality of cation exchange membranes and anion exchange membranes are each provided in a number of 3+2(n-1), where n is an integer greater than or equal to 1, and, preferably, 50 or less.

In one embodiment, the cation exchange resin is configured to contain a compound comprising a sulfonic acid group and/or a salt thereof.

In one embodiment, the anion exchange resin is configured to contain a compound comprising an amine group and/or a salt thereof.

In one embodiment, a content of the anion exchange resin in the mixed ion exchange resin is 20 to 80 vol%, preferably 40 to 70 vol%, more preferably 50 to 60 vol%, with respect to a total volume of the mixed ion exchange resin in dry state.

According to one embodiment of the present disclosure, the limitation of water dissociation performance of an electrodialysis system due to the surface area limitation of a bipolar membrane can be alleviated, and operation of the electrodialysis system under high current can be enabled.

### BRIEF DESCRIPTION OF THE DRAWINGS

The above and other objects, features, and advantages of the present disclosure will become more apparent to those of ordinary skill in the art by describing exemplary embodiments thereof in detail with reference to the accompanying drawings, in which:
FIG. 1 is a cross-sectional view schematically illustrating an electrodialysis system according to one embodiment;
FIG. 2 is a schematic diagram showing the water dissociation step at the interface of a mixed ion exchange resin;
FIG. 3 is a cross-sectional view schematically illustrating an electrodialysis system according to one embodiment;
FIG. 4 is a plot showing the change in pH of a concentration chamber of an electrodialysis system according to one embodiment;
FIG. 5 is a graph showing the change in pH of a concentration chamber according to a composition of a mixed ion exchange resin according to one embodiment;
FIG. 6 is a graph showing the change in electrical conductivity of a concentration chamber according to a composition of a mixed ion exchange resin according to one embodiment;
FIG. 7 is a graph showing the change in pH of a concentration chamber according to a composition of a mixed ion exchange resin according to one embodiment; and
FIG. 8 is a graph showing the change in electrical conductivity of a concentration chamber according to a composition of a mixed ion exchange resin according to one embodiment.

### DETAILED DESCRIPTION

Hereinafter, the present disclosure will be described in detail. However, this is merely exemplary, and the present disclosure is not limited to the specific embodiments described by way of example.

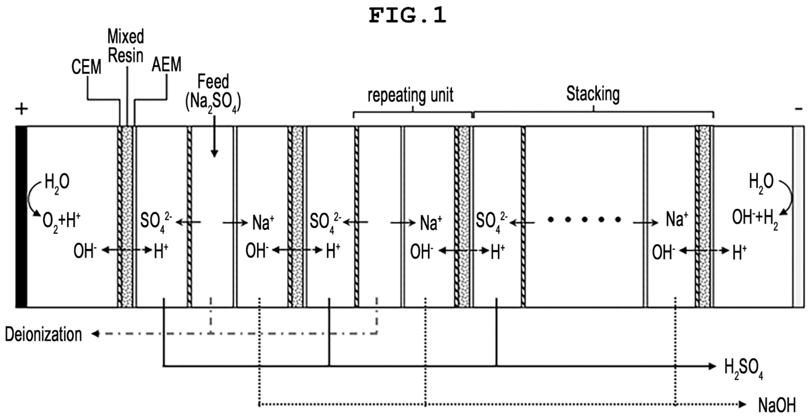

An electrodialysis system of the present disclosure includes an anode and a cathode. Referring to FIG. 1, the anode and the cathode are disposed at both ends of the electrodialysis system. The anode and the cathode are connected to a power source, and when the power source is applied, a potential difference is formed between a plurality of cation exchange membranes and anion exchange membranes disposed between electrodes. Due to the potential difference, the salt introduced into the electrodialysis system is ionized.

Although the components of the anode are not particularly limited, it is preferable that it is made of Pt, SUS (stainless steel), Ti, Ni, or a combination thereof, in consideration of the ease of oxygen evolution and cost aspects. The cathode is preferably a material that prevents overvoltage application and has chemical stability, and may be, for example, mixed metal oxide (MMO), Pt, or Ni.
The electrodialysis system includes a plurality of alternating cation exchange membranes and anion exchange membranes disposed between the anode and the cathode, wherein the alternating cation exchange membranes and anion exchange membranes form compartments within the system. When power is applied through a power source to the electrodialysis system to form a potential difference, the cation exchange membranes selectively allow only cations but essentially no or only traces of anions, to pass therethrough, and the anion exchange membranes selectively allow only anions but essentially no or only traces of cations to pass therethrough, thereby concentrating a target component in each compartment or separating impurities therefrom. Among the compartments, the compartment into which ions passing through the cation and anion exchange membranes enter is referred to as a concentration chamber, and the compartment into which ions exit through the cation and anion exchange membranes is referred to as a desalination chamber. Here, migration may be a main factor of driving ion movement through each of the membrane layers. In addition, the compartment formed by ion exchange membranes most adjacent to the anode and the cathode is referred to as electrode chamber. Two electrode chambers may be provided, which may also be referred to as anode and cathode chambers that may respectively be arranged to be in contact with the anode and the cathode. For example, the anode and the cathode may respectively be immersed into the anode and cathode chambers, respectively. Water may be supplied to each of the electrode chambers. Additionally, an H₂SO₄ solution may be supplied as an electrolyte to the electrode chamber in which the anode is disposed, and a NaOH solution may be supplied as an electrolyte to the electrode chamber in which the cathode is disposed.

In one embodiment, a plurality of cation exchange membranes and anion exchange membranes may each be 3+2(n-1), where n is an integer greater than or equal to 1. That is, there are at least three cation exchange membranes and three anion exchange membranes, which corresponds to the minimum number of membranes to form the two or more concentration chambers, the one or more desalination chamber(s), and the two or more spaces between the electrode chambers and the adjacent concentration chambers. When n is 1, three pairs of cation and anion exchange membranes are provided. When n is 2, for example, five pairs of cation and anion exchange membranes are provided. In the embodiments in which n is 2 or more, a stacked configuration may be realized. Therein, additional concentration chambers which are adjacent to each other may be provided within the system in between the anode and the cathode. When n is 2 or more, (n-1) layer(s) comprising the mixed ion exchange resin may respectively be provided between each of the adjacent concentration chambers (i.e., the adjacent acid and base recovery chambers). The number of each of the cation exchange membrane and the anion exchange membrane may be increased in increments of two to create the spaces for disposing the desalination chambers, the concentration chambers, and the spaces where the mixed ion exchange resin is disposed. Preferably, n is an integer of 1 to 100, more preferably 1 to 50, and even more preferably of 1 to 20.

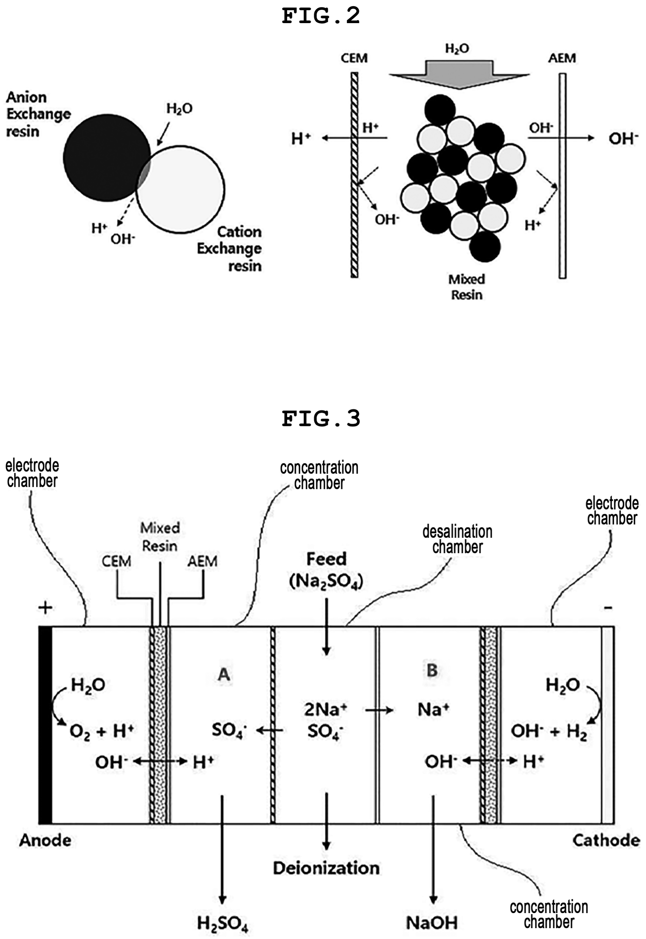

The electrodialysis system includes a mixed ion exchange resin disposed between the electrode chamber and the concentration chamber, and between the adjacent concentration chambers. The mixed ion exchange resin includes a cation exchange resin and an anion exchange resin. In a conventional bipolar electrodialysis system, instead of the cation and anion exchange membranes interposed with the mixed ion exchange resin of the present disclosure, there is a bipolar membrane in which the cation exchange membrane and the anion exchange membrane are in direct contact, or separated by the interfacial catalyst layer. The bipolar membrane is not suitable for high-current operation due to reasons such as the possibility of thermal deformation due to the lifting phenomenon such as delamination between the individual components of the bipolar membrane and area constraints between a cation exchange membrane and an anion exchange membrane, and the water dissociation (H₂O → H⁺ + OH⁻) performance at the contact interface between the cation exchange membrane and the anion exchange membrane of the bipolar membrane is limited due to the limitation of the area or minute interfacial volume between the cation exchange membrane and the anion exchange membrane. In addition, the conventional bipolar membrane is also disadvantageous in terms of cost, energy demand and/or energy efficiency, especially when utilized without an interfacial layer catalyst which promotes water dissociation at the interface (e.g., through enhancing the so-called second Wien effect). In the electrodialysis system of the present disclosure, a mixed ion exchange resin is arranged between a cation (anion) exchange membrane forming the electrode chamber and an anion (cation) exchange membrane forming the adjacent concentration chamber, and further between a cation exchange membrane forming the concentration chamber and an anion exchange membrane forming the adjacent concentration chamber, thereby making the electrodialysis system suitable for high current operation, and allows the water dissociation reaction to be performed in a three-dimensional space filled with the mixed ion exchange resin, as illustrated in FIG. 2, rather than a two-dimensional plane, and also resolving limitations in water dissociation performance due to area constraints of the bipolar membrane. In addition, the ion exchange performance of a membrane structure including the mixed ion exchange resin is stable and not affected by the lifting phenomenon between the cation exchange membrane and the anion exchange membrane, and it can have the advantage of being cheaper than the bipolar membrane in terms of cost, especially since only individual anion and cation exchange membranes may be utilized but no conventional bipolar membrane.

In one embodiment, the system may comprise more than one repeating unit respectively including a desalination chamber, a concentration chamber, and a space where the mixed ion exchange resin is disposed. As schematically illustrated in FIG. 1, the provision of more than one repeating units may lead to a stacked system or device comprising more than three pairs of cation and anion exchange membranes in total.

In one embodiment, the content of the anion exchange resin in the mixed ion exchange resin may be 20 to 80 vol% with respect to the total volume of the mixed ion exchange resin in dry state. The above numerical value is intended to balance the ion exchange capacities of the cation exchange resin and the anion exchange resin within the mixed ion exchange resin. When the content of the anion exchange resin in the mixed ion exchange resin is less than 20 vol% or more than 80 vol%, the water dissociation reaction may not be performed smoothly due to an imbalance between the anion exchange resin and the cation exchange resin in the mixed ion exchange resin. In one embodiment, the content of the anion exchange resin in the mixed ion exchange resin may be specifically 35 to 60 vol%, more specifically 40 to 50 vol%. The component of the mixed ion exchange resin, other than the anion exchange resin, is the cation exchange resin. In another embodiment, more than one type of anion exchange and/or cation exchange resin(s) may be provided in the mixed ion exchange resin.

In one embodiment, the cation exchange resin may include a compound containing a sulfonic acid group or a corresponding anionic sulfonate group. The cation exchange resin selectively exchanges cations in the mixed ion exchange resin, and specifically, substitutes cations to be removed from water with exchange ions bonded to an ion exchange group. Here, the ion exchange group corresponds to the sulfonic acid group. The sulfonic acid group may be considered a strong acid that dissociates readily in aqueous solution to form highly stable RSO₃⁻ species and H⁺ ions. The cation exchange resin transfers cations in water to the cation exchange membrane by replacing cations in water, such as Na⁺, with exchange ions bonded to the sulfonic acid group (more specifically, to the anionic sulfonate group).

In one embodiment, the anion exchange resin may include a compound containing an amine group or a corresponding cationic ammonium group. The anion exchange resin selectively exchanges anions in the mixed ion exchange resin, and specifically, substitutes anions to be removed from water with exchange ions bonded to an ion exchange group. Here, the ion exchange group corresponds to the amine group. The anion exchange resin transfers anions in water to the anion exchange membrane by replacing anions in water, such as SO₄²⁻, with exchange ions bonded to the amine group (more specifically, to the cationic ammonium group).

A salt separation method using the electrodialysis system of the present disclosure includes introducing a salt solution into a desalination chamber formed by a cation exchange membrane and an anion exchange membrane; and applying current to the electrodialysis system.

In the salt solution introduction, the salt solution is introduced into the desalination chamber of the electrodialysis system. In the salt solution introduced into the desalination chamber, the salt is present in a state in which it is separated into ions.

In the current application, current is applied to the anode and the cathode from a power source connected to the anode and the cathode of the electrodialysis system. A potential difference is formed in each compartment formed by the cation and anion exchange membranes of the electrodialysis system by the applied current. Due to the potential difference formed, the salt present in the desalination chamber is separated into cations and anions, and the separated cations pass through the cation exchange membrane, and the separated anions pass through an anion exchange membrane and move to the concentration chamber. In addition, water is separated into H⁺ ions and OH⁻ ions by a dissociation reaction between a pair of the cation exchange membrane and the anion exchange membrane, which are interposed with the mixed ion exchange resin closest to the anode and the cathode, and among these, H⁺ ions are introduced into the concentration chamber through the cation exchange membrane, and OH⁻ ions are introduced into the concentration chamber through the anion exchange membrane. In the concentration chamber, the cations introduced through the cation exchange membrane and the anions introduced through the anion exchange membrane can each combine with OH⁻ ions and H⁺ ions to form acids and bases. As a result, acids and bases may be recovered through salt separation using the electrodialysis system, and the recovered acids and bases may be used in further processes. Referring to FIG. 1, when a salt solution containing Na₂SO₄ is introduced into the desalination chamber and current is applied to the electrodialysis system, Na⁺ ions pass through a cation exchange membrane and are introduced into the concentration chamber, and SO₄²⁻ ions pass through an anion exchange membrane and are introduced into the concentration chamber. In addition, in the compartment filled with the mixed ion exchange resin, H⁺ and OH⁻ ions generated by the water dissociation reaction pass through (i.e., migrate and/or diffuse through) the cation exchange membrane and the anion exchange membrane, respectively, and move to the concentration chamber. Na⁺ ions introduced into the concentration chamber react with OH⁻ ions to form a base, and SO₄²⁻ ions react with H⁺ ions to form an acid.

The current applied to the electrodialysis system in the current application may be higher than the current typically applied to the electrodialysis system including the bipolar membrane. Approximately, the current applied to an electrodialysis system including a conventional bipolar membrane may be up to about 1 A/cm², while the current applied to the electrodialysis system may be up to about 2 A/cm². This is because, as described above, the electrodialysis system of the present disclosure has improved stability by including the mixed ion exchange resin having a three-dimensional water dissociation interface instead of the bipolar membrane having a two-dimensional water dissociation interface. By operating at an increased current density range, the electrodialysis system increases the water dissociation rate, enabling it to produce large quantities of acid and base even during short operating times, and to produce acid and base at higher concentrations.

Hereinafter, examples of the present disclosure are further described with reference to specific experimental examples. The examples and comparative examples included in the experimental examples are merely illustrative of the present disclosure and are not intended to limit the scope of the appended claims. It will be apparent to those skilled in the art that various changes and modifications can be made to the examples within the scope and technical ideas of the present disclosure, and it is natural that such changes and modifications fall within the scope of the appended claims.

### Experimental Example 1 - Identification of acid and base production in concentration chamber

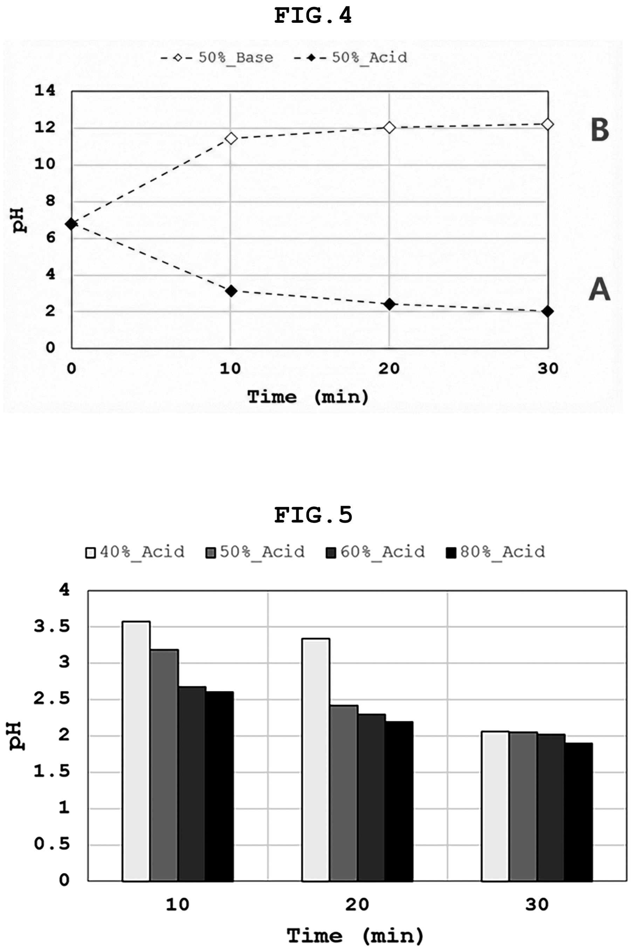

As shown in FIG. 3, an electrodialysis system was prepared in which three pairs of cation exchange membranes and anion exchange membranes are disposed between an anode and a cathode, and a mixed ion exchange resin is disposed between a cation (anion) exchange membrane forming an electrode chamber and an anion (cation) exchange membrane forming a concentration chamber adjacent to an electrode chamber. Here, the anode was a mixed metal oxide (MMO) electrode comprising a mixture of ruthenium oxide, iridium oxide, nickel oxide, tantalum oxide, titanium oxide, and platinum oxide and the cathode was a mesh-shaped SUS. The size of both electrodes was 2 × 3 cm². The mixed ion exchange resin contained 50 vol% of a cation exchange resin and 50 vol% of an anion exchange resin. Herein, the cation exchange resin is a strongly acidic cation exchange resin having an H⁺-type functional group, an acrylic polymer matrix, and a carboxylic acid group as a matrix active group, whereas the anion exchange resin is a strongly basic anion exchange resin having an OH⁻-type functional group, a styrene/divinylbenzene matrix, and a quaternary ammonium group as a matrix active group. A 1.25 M Na₂SO₄ salt solution was introduced into a desalination chamber of the electrodialysis system, and a constant voltage of 60 V was applied to both electrodes. After voltage application, the pH change in the two concentration chambers (FIG. 3A and 3B) over time was measured. Specifically, the pH was measured using a Seven Excellence pH/Conductivity meter (S470-Std-K, Mettler Toledo) while the rectifier was turned off at predetermined time intervals. The measurement results were as shown in FIG. 4.

Referring to FIG. 4, it can be confirmed that the pH tends to decrease in a concentration chamber A (cf. Fig. 3) and increase in a concentration chamber B (cf. Fig. 3) over time after voltage application. Chamber A and chamber B may also be referred to as acid recovery chamber and base recovery chamber, respectively. From this, it can be inferred that dissociation of H⁺ ions is smoothly performed in the compartment where the mixed ion exchange resin is interposed near the anode, and dissociation of OH⁻ ions is smoothly performed in the compartment where the mixed ion exchange resin is interposed near the cathode.

### Experimental Example 2 - Measurement of pH and electrical conductivity changes according to composition of mixed ion exchange resin

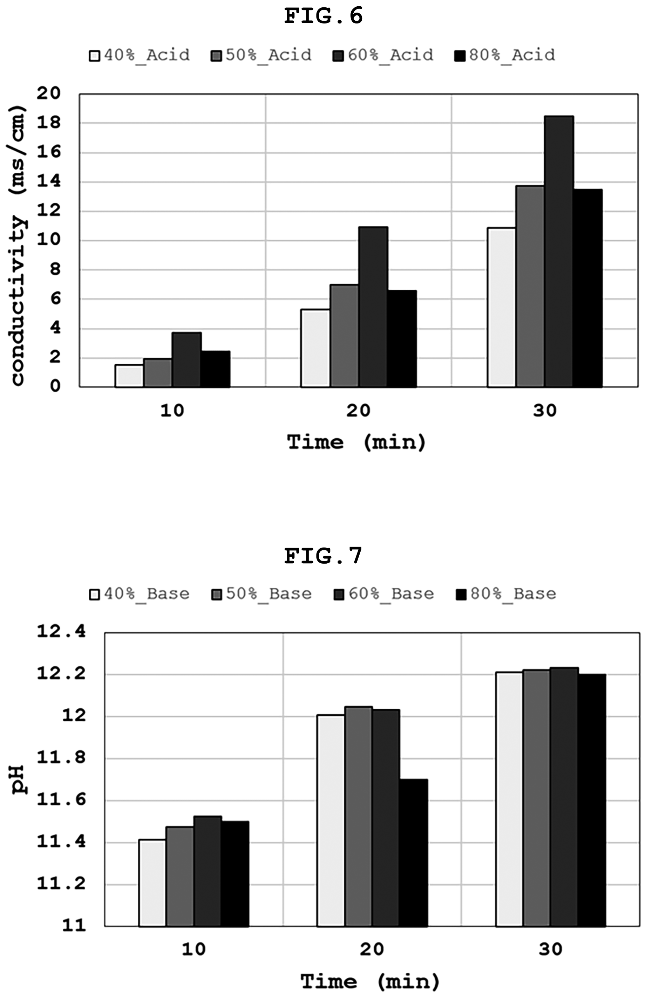

In the electrodialysis system of Experimental Example 1, the pH and electrical conductivity changes in a concentration chamber A were measured while changing the content of an anion exchange resin of a mixed ion exchange resin adjacent to a concentration chamber A to 40 vol%, 50 vol%, 60 vol%, and 80 vol%. The measurement results were as shown in FIGS. 5 and 6.

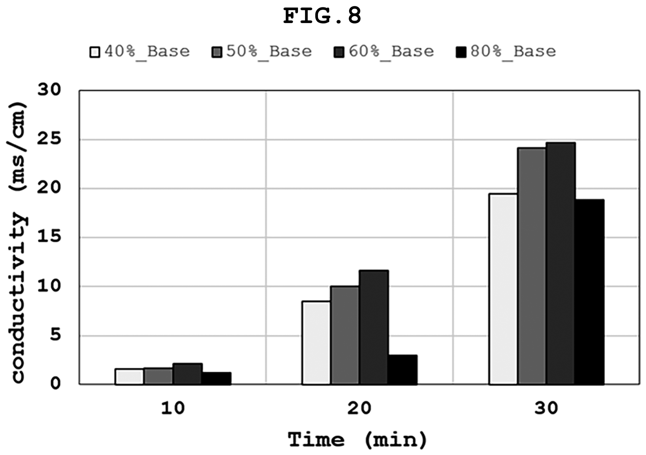

In the same manner, In the electrodialysis system of Experimental Example 1, the pH and electrical conductivity changes in a concentration chamber B were measured while changing the content of an anion exchange resin of a mixed ion exchange resin adjacent to a concentration chamber B to 40 vol%, 50 vol%, 60 vol%, and 80 vol%. Herein, the pH and electrical conductivity were measured using a Seven Excellence pH/Conductivity meter (S470-Std-K, Mettler Toledo) while the rectifier was turned off at predetermined time intervals. The measurement results were as shown in FIGS. 7 and 8.

Referring to FIG. 5, within about 20 minutes after voltage application, a tendency was observed for the pH of a concentration chamber A to be lower as the content of the anion exchange resin in the mixed ion exchange resin increased, but after 30 minutes following voltage application, a pH of almost the same level was observed regardless of the content of the anion exchange resin in the mixed ion exchange resin. Referring to FIG. 6, the electrical conductivity of the concentration chamber A increased in proportion to the content of the anion exchange resin up to a content of 60 vol% of the anion exchange resin in the mixed ion exchange resin, and then decreased rapidly when the content of the anion exchange resin in the mixed ion exchange resin was 80 vol%. From this, it could be inferred that when the content of the anion exchange resin in the mixed ion exchange resin is 80 vol%, the absolute contact area of the ion exchange resin with the salt solution decreases.

In FIG. 7, it was confirmed that the pH of the concentration chamber B was almost the same regardless of the content of the anion exchange resin in the mixed ion exchange resin within about 10 minutes after voltage application, but when 20 minutes had passed after voltage application, the pH was significantly lowered when the content of the anion exchange resin in the mixed ion exchange resin was 80 vol%. About 30 minutes after voltage application, the pH of the concentration chamber B was almost equal again. Referring to FIG. 8, the electrical conductivity of the concentration chamber B increased in proportion to the content of the anion exchange resin up to a content of 60 vol% of the anion exchange resin in the mixed ion exchange resin after voltage application, and then decreased rapidly when the content of the anion exchange resin in the mixed ion exchange resin was 80 vol%. From this, it could be inferred that when the content of the anion exchange resin in the mixed ion exchange resin is 80 vol%, the absolute contact area of the ion exchange resin with the salt solution decreases.

According to one embodiment of the present disclosure, the water separation performance limitation of an electrodialysis system caused by the surface area constraint of a bipolar membrane can be mitigated, and operation of the electrodialysis system under high current conditions can be enabled.

As described above, the present disclosure has been described in detail through specific embodiments. The embodiments are intended to specifically illustrate the present disclosure, and the present disclosure is not limited thereto. It will be apparent that modifications and improvements can be made within the technical concept of the present disclosure by a person having ordinary knowledge in the relevant field.

All simple modifications or changes of the present disclosure fall within the scope of the present disclosure, and the specific scope of protection of the present disclosure will become apparent by the appended claims.

## Claims

1. An electrodialysis system comprising:
an anode and a cathode;
a plurality of alternating cation exchange membranes and anion exchange membranes disposed between the anode and the cathode, the alternating cation exchange membranes and anion exchange membranes forming a desalination chamber, a concentration chamber, and an electrode chamber within the system; and
a mixed ion exchange resin disposed between the electrode chamber and the adjacent concentration chamber, and between the adjacent concentration chambers,
wherein the mixed ion exchange resin includes a cation exchange resin and an anion exchange resin, and
wherein the mixed ion exchange resin is arranged to be sandwiched between one of each of the cation and anion exchange membranes.

2. The electrodialysis system of claim 1, wherein the electrode chamber comprises an anode chamber for an oxygen evolution reaction and a cathode chamber for a hydrogen evolution reaction.

3. The electrodialysis system of claim 1 or 2, wherein the plurality of cation exchange membranes and anion exchange membranes are each provided in a number of 3+2(n-1), where n is an integer greater than or equal to 1, and, preferably, 50 or less.

4. The electrodialysis system of any one of claims 1 to 3, wherein a content of the anion exchange resin in the mixed ion exchange resin is 20 to 80 vol% with respect to a total volume of the mixed ion exchange resin in dry state.

5. The electrodialysis system of any one of claims 1 to 4, wherein the cation exchange resin includes a compound containing a sulfonic acid group and/or a salt thereof.

6. The electrodialysis system of any one of claims 1 to 5, wherein the anion exchange resin includes a compound containing an amine group and/or a salt thereof.

7. A salt separation method comprising:
providing an electrodialysis system including an anode, a cathode, and a plurality of alternating cation exchange membranes and anion exchange membranes arranged between the anode and the cathode, the alternating cation exchange membranes and anion exchange membranes forming a desalination chamber, a concentration chamber, and an electrode chamber within the system;
introducing a salt solution into the desalination chamber which is arranged to be separated from the concentration chamber by one of the plurality of alternating cation exchange membranes and anion exchange membranes; and
applying a current or a voltage to the anode and the cathode of the electrodialysis system,
**characterized in that** a mixed ion exchange resin is arranged to be disposed between the electrode chamber and the adjacent concentration chamber, and between the adjacent concentration chambers.

8. The salt separation method of claim 7, wherein the salt solution comprises Na₂SO₄,
preferably wherein the salt solution is an aqueous Na₂SO₄ solution having a concentration of 0.01 to 2.0 mol/L, more preferably of 0.1 to 1.5 mol/L.

9. The salt separation method of claim 7 or 8, wherein the voltage applied to the anode and the cathode of the electrodialysis system is in a range of 2 V to 100 V, preferably 5 V to 60 V, more preferably 10 to 60 V, most preferably 10 to 50 V, and/or
wherein the current is in a range of 0.1 A/cm² or more and 2.0 A/cm² or less.

10. The salt separation method of any one of claims 7 to 9, wherein the plurality of cation exchange membranes and anion exchange membranes are each provided in a number of 3+2(n-1), where n is an integer greater than or equal to 1, and, preferably, 50 or less.

11. The salt separation method of any one of claims 7 to 10, wherein the cation exchange resin is configured to contain a compound comprising a sulfonic acid group and/or a salt thereof.

12. The salt separation method of any one of claims 7 to 11, wherein the anion exchange resin is configured to contain a compound comprising an amine group and/or a salt thereof.

13. The salt separation method of any one of claims 7 to 12, wherein a content of the anion exchange resin in the mixed ion exchange resin is 20 to 80 vol%, preferably 40 to 70 vol%, more preferably 50 to 60 vol%, with respect to a total volume of the mixed ion exchange resin in dry state.
